# EUROPÄISCHE PATENTSCHRIFT

(11) **EP 2 825 834 B1**
(45) Veröffentlichungstag und Bekanntmachung des Hinweises auf die Patenterteilung: **23.03.2016**
(21) Anmeldenummer: 13704545.6
(22) Anmeldetag: 11.01.2013
(51) Int. Cl.: F28F 13/18, F24F 3/14, B01J 20/28

(54) **FEUCHTIGKEITS- UND/ODER WÄRMEAUSTAUSCHVORRICHTUNG**
EXCHANGE DEVICE FOR HUMIDITY AND/OR HEAT
ÉCHANGEUR D'HUMIDITÉ ET/OU DE CHALEUR

(30) Priorität: 15.03.2012 DE 202012002693 U
(43) Veröffentlichungstag der Anmeldung: 21.01.2015
(73) Patentinhaber: Klingenburg GmbH, 45968 Gladbeck (DE)
(72) Erfinder: KLINGENBURG, Kai, 45239 Essen (DE)
(74) Vertreter: Lelgemann, Karl-Heinz
(86) Internationale Anmeldenummer: PCT/EP2013/000059
(87) Internationale Veröffentlichungsnummer: WO 2013/135328

(56) Entgegenhaltungen:
- DE-A1-102005 003 543
- DE-A1-102009 003 560
- US-A- 4 769 053

## Beschreibung

Die Erfindung bezieht sich auf eine Feuchtigkeits- und/oder Wärmeaustauschvorrichtung, z.B. Plattenwärmetauscher, Sorptionsrotor, Adsorptionsentfeuchtungsrotor od.dgl., mit Feuchtigkeits- bzw. Wärmeaustauschflächen, mittels denen Feuchtigkeit und/oder Wärme in einen Fluidstrom einbringbar und/oder einem Fluidstrom entziehbar und/oder zwischen Fluidströmen austauschbar ist, und einer Beschichtung, mit der die Feuchtigkeits- bzw. Wärmeaustauschflächen beschichtet sind und die ein Bindemittel und einen Nano-Zeolith mit einer Partikelgröße <1000 nm enthält.

Es ist aus dem Stand der Technik bekannt, derartige Austauschflächen mit einer Beschichtung aus Nano-Zeolith zu versehen, um den Wirkungsgrad derartiger Feuchtigkeits- und/oder Wärmeaustauschvorrichtungen zu erhöhen und um einen dauerhaft zuverlässigen Betrieb derartiger Vorrichtungen sicherzustellen. Eine solche Austauschvorrichtung wird in DE 10 2005 003 543 A1 offenbart.

Beim Betrieb derartiger Feuchtigkeits- und/oder Wärmeaustauschvorrichtungen traten insoweit Probleme auf, als eine dauerhafte Anhaftung der den Nano-Zeolith enthaltenden Beschichtung an den Unterflächen häufig nicht gewährleistet werden konnte. Darüber hinaus traten häufig Schwierigkeiten beim Beschichtungsvorgang selbst auf.

Ausgehend von dem vorstehend geschilderten Stand der Technik liegt der Erfindung die Aufgabe zugrunde, die gattungsgemäße Feuchtigkeits- und/oder Wärmeaustauschvorrichtung derart weiterzubilden, dass zum einen der Vorgang der Beschichtung ihrer Feuchtigkeits- bzw. Wärmeaustauschflächen mit der den Nano-Zeolith enthaltenden Beschichtung erleichtert ist und dass andererseits ein dauerhaftes Anhaften der aufgetragenen Beschichtung gewährleistet werden kann.

Diese Aufgabe wird erfindungsgemäß dadurch gelöst, dass das Bindemittel, mittels dem der Nano-Zeolith an die Unterfläche angebracht wird, ein Polyurethanharz ist.

Bei Einsatz dieses Bindemittels hat sich eine im Vergleich zum Stand der Technik erheblich einfachere Aufbringung der Beschichtung ergeben, wobei darüber hinaus das Anhaften der aufgebrachten Beschichtung an der Unterfläche über einen langen Zeitraum sicher gewährleistet werden kann.

Um die übertragung von Geruchsstoffen od.dgl. zu vermeiden, ist es vorteilhaft, wenn der Nano-Zeolith eine homogene Porengrößenverteilung mit einem Porendurchmesser <1,5 nm, vorzugsweise 0,4 nm und/oder 0,3 nm, besitzt.

Die Partikel des Nano-Zeolith können zweckmäßigerweise in nano-kristalliner Form vorliegen.

Die Dicke der Beschichtung kann je nach Anforderungsprofil zwischen 0,2 bis 100 bzw. 1 bis 20 oder 10 bis 20 µ (10⁻⁶ m) liegen.

Als Werkstoff für die Ausgestaltung der Feuchtigkeits- bzw. Wärmeaustauschflächen kommt Aluminium, jeder andere geeignete metallische oder keramische Werkstoff, Kunststoff oder Papier in Frage.

Gemäß einer vorteilhaften Ausführungsform der Erfindung ist die Beschichtung aus dem Nano-Zeolith und dem Bindemittel auf eine nicht geprimerte bzw. keinen Haftgrund bildenden Maßnahmen unterzogene Aluminiumfläche, insbesondere auf eine ungereinigte und nicht vorbehandelte Aluminiumfläche, aufgebracht.

Das Bindemittel bzw. das Polyurethanharz ist vorzugsweise ein Polyester-basiertes Polyurethanharz.

Im Folgenden wird die Erfindung anhand einer Ausführungsform näher erläutert.

Ein Plattenwärmetauscher, ein Sorptionsrotor, ein Adsorptionsentfeuchtungsrotor od.dgl. hat Feuchtigkeits- bzw. Wärmeaustauschflächen, die eben, gewellt oder in anderer geeigneter Weise strukturiert ausgebildet sind.

Im Falle der erfindungsgemäßen Feuchtigkeits- und/oder Wärmeaustauschvorrichtung sind diese Flächen beschichtet, und zwar mit einer Beschichtung, die neben einem Bindemittel einen Nano-Zeolithen enthält. Dieser Nano-Zeolith hat eine Partikelgröße <1000 nm und eine homogene Porengrößenverteilung mit einem Porendurchmesser, der unterhalb von 1,5 nm, vorzugsweise bei ca. 0,4 nm oder 0,3 nm, liegt. Das Bindemittel wird im Falle der erfindungsgemäßen Feuchtigkeits- und/oder Wärmeaustauschvorrichtung in Form einer 40 Gew.-%igen wässrigen Dispersion eines Polyester-basierten Polyurethanharzes enthaltend den Nano-Zeolith auf die Feuchtigkeits- bzw. Wärmeaustauschflächen aufgebracht und ausgehärtet.

Die Dicke der Beschichtung liegt je nach Anforderungsprofil zwischen 0,2 und 100 µ, z.B. zwischen 10 und 20 µ.

Die Feuchtigkeits- bzw. Wärmeaustauschflächen können durch Aluminium gebildet sein. Die vorstehend geschilderte Beschichtung wird auf das Aluminium aufgebracht, ohne dass die Oberfläche des Aluminium vorher haftungsbildenden Maßnahmen unterzogen würde. Es ist sogar möglich, die vorstehend geschilderte Beschichtung auf eine ungereinigte und unvorbehandelte Aluminiumfläche aufzubringen.

Die derart zusammengesetzte Beschichtung ist geeignet, langfristig fest zu haften. Sie ist dauerhaft betriebssicher. Der Aufwand für ihre Aufbringung ist vergleichsweise gering, da eine Vorbehandlung bzw. ein Primern der Unterfläche der Beschichtung nicht erforderlich ist.

## Patentansprüche

1. Feuchtigkeits- und/oder Wärmeaustauschvorrichtung, z.B. Plattenwärmetauscher, Sorptionsrotor, Adsorptionsentfeuchtungsrotor od.dgl., mit Feuchtigkeits- bzw. Wärmeaustauschflächen, mittels denen Feuchtigkeit und/oder Wärme in einen Fluidstrom einbringbar und/oder einem Fluidstrom entziehbar und/oder zwischen Fluidströmen austauschbar ist, und einer Beschichtung, mit der die Feuchtigkeits- bzw. Wärmeaustauschflächen beschichtet sind und die ein Bindemittel und einen Nano-Zeolith mit einer Partikelgröße <1000 nm enthält, **dadurch gekennzeichnet, dass** das Bindemittel ein Polyurethanharz ist.

2. Feuchtigkeits- und/oder Wärmeaustauschvorrichtung nach Anspruch 1, bei der der Nano-Zeolith eine homogene Porengrößenverteilung mit einem Porendurchmesser <1,5 nm, vorzugsweise 0,4 nm und/oder 0,3 nm, besitzt.

3. Feuchtigkeits- und/oder Wärmeaustauschvorrichtung nach Anspruch 1 oder 2, bei der die Partikel des Nano-Zeolith in nano-kristalliner Form vorliegen.

4. Feuchtigkeits- und/oder Wärmeaustauschvorrichtung nach einem der Ansprüche 1 bis 3, bei der die Dicke der Beschichtung 0,2 bis 100, vorzugsweise 1 bis 20 und insbesondere 10 bis 20 µ (10⁻⁶m) aufweist.

5. Feuchtigkeits- und/oder Wärmeaustauschvorrichtung nach einem der Ansprüche 1 bis 4, deren Feuchtigkeits- bzw. Wärmeaustauschflächen aus Aluminium, anderen geeigneten metallischen oder keramischen Werkstoffen, Kunststoffen oder Papier ausgebildet sind.

6. Feuchtigkeits- und/oder Wärmeaustauschvorrichtung nach einem der Ansprüche 1 bis 5, bei der die Beschichtung aus dem Nano-Zeolith und dem Polyurethanharz auf eine ungeprimerte bzw. keinen Haftgrund bildenden Maßnahmen unterzogene, insbesondere auf eine ungereinigte und nicht vorbehandelte Aluminiumfläche aufgebracht ist.

7. Feuchtigkeits- und/oder Wärmeaustauschvorrichtung nach einem der Ansprüche 1 bis 6, bei der das Bindemittel ein Polyester-basiertes Polyurethanharz ist.

## Claims

1. A moisture and/or heat exchange device, e.g. a plate heat exchanger, a sorption rotor, an adsorption dehumidification rotor or similar, having moisture or heat-exchange surfaces by means of which moisture and/or heat can be introduced into a fluid flow and/or removed from a fluid flow and/or is exchangeable between fluid flows, and a coating with which the moisture or heat exchange surfaces are coated and which contains a binding agent and a nano-zeolite with a particle size < 1000 nm, **characterized in that** the binding agent is a polyurethane resin.

2. The moisture and/or heat exchange device according to claim 1, wherein the nano-zeolite has a homogeneous pore size distribution with a pore diameter < 1.5 nm, preferably 0.4 nm and/or 0.3 nm.

3. The moisture and/or heat exchange device according to claim 1 or 2, wherein the particles of nano-zeolite may advantageously exist in nano-crystalline form.

4. The moisture and/or heat exchange device according to one of the claims 1 to 3, wherein the thickness of the coating may lie between 0.2 and 100, preferably 1 and 20 and in particular 10 and 20 µ (10⁻⁶ m).

5. The moisture and/or heat exchange device according to one of the claims 1 to 4, the moisture or heat exchange surfaces of which are made of aluminium, other suitable metallic or ceramic materials, plastics or paper.

6. The moisture and/or heat exchange device according to one of the claims 1 to 5, wherein the coating of the nano-zeolite and the polyurethane resin is applied to an unprimed aluminium surface or one that has not undergone holding primer-forming measures, in particular to an uncleaned and unpretreated aluminium surface.

7. The moisture and/or heat exchange device according to one of the claims 1 to 6, wherein the binding agent is a polyester-based polyurethane resin.

## Revendications

1. Dispositif d'échange d'humidité et/ou de chaleur, par ex. échangeur thermique à plaques, rotor d'adsorption, rotor de déshumidification par adsorption ou similaires, avec des surfaces d'échange d'humidité ou de chaleur au moyen desquelles de l'humidité et/ou de la chaleur peut être introduite dans un flux de fluide et/ou peut être retirée d'un flux de fluide et/ou peut s'échanger entre des flux de fluide et avec un revêtement avec lequel les surface d'échange d'humidité ou de chaleur sont revêtues et qui contient un agent liant et une nano-zéolithe d'une taille de particules <1000 nm, **caractérisé en ce que** l'agent liant est une résine de polyuréthane.

2. Dispositif d'échange d'humidité et/ou de chaleur selon la revendication 1, sur lequel la nano-zéolithe présente une distribution homogène de la taille des pores avec un diamètre des pores <1,5 nm, de préférence 0,4 nm et/ou 0,3 nm.

3. Dispositif d'échange d'humidité et/ou de chaleur selon la revendication 1 ou la revendication 2, sur lequel les particules de la nano-zéolithe se présentent sous une forme nanocristalline.

4. Dispositif d'échange d'humidité et/ou de chaleur selon l'une quelconque des revendications 1 à 3, sur lequel l'épaisseur du revêtement est de 0,2 à 100, de préférence de 1 à 20 et notamment de 10 à 20 µ (10⁻⁶m).

5. Dispositif d'échange d'humidité et/ou de chaleur selon l'une quelconque des revendications 1 à 4, dont les surfaces d'échange d'humidité ou de chaleur sont conçues en aluminium, en d'autres matières métalliques ou céramiques, matières plastiques adaptées ou en papier.

6. Dispositif d'échange d'humidité et/ou de chaleur selon l'une quelconque des revendications 1 à 5, sur lequel le revêtement en la nano-zéolithe et en la résine de polyuréthane est appliqué sur une surface en aluminium exempte de couche d'apprêt, c'est-à-dire non soumise à aucune action formant une couche passivante, notamment non nettoyée et non prétraitée.

7. Dispositif d'échange d'humidité et/ou de chaleur selon l'une quelconque des revendications 1 à 6, sur lequel l'agent liant est une résine de polyuréthane sur base de polyester.
